(19) Europäisches Patentamt
European Patent Office
Office européen des brevets

(11) Publication number: **0 058 062**
**B1**

(12) # EUROPEAN PATENT SPECIFICATION

(45) Date of publication of patent specification: **10.04.85**

(51) Int. Cl.$^4$: **E 21 B 43/22**

(21) Application number: **82300582.2**

(22) Date of filing: **05.02.82**

(54) **Oil recovery by surfactant-alcohol waterflooding.**

(30) Priority: **09.02.81 US 232474**

(43) Date of publication of application:
**18.08.82 Bulletin 82/33**

(45) Publication of the grant of the patent:
**10.04.85 Bulletin 85/15**

(84) Designated Contracting States:
**DE FR GB NL**

(56) References cited:
**GB-A-2 001 377**
**US-A-3 797 574**
**US-A-3 916 997**
**US-A-4 193 452**
**US-A-4 216 097**

(73) Proprietor: **MOBIL OIL CORPORATION**
**150 East 42nd Street**
**New York New York 10017 (US)**

(72) Inventor: **Chen, Catherine Shuihua Hsia**
**102 Pine Grove Road**
**Berkeley Heights New Jersey (US)**
Inventor: **Luh, Yuhshi**
**154 Penn Lear Drive**
**Monroeville Pennsylvania (US)**

(74) Representative: **West, Alan Harry et al**
**Mobil Court 3 Clements Inn**
**London WC2A 2EB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 058 062 B1

**Description**

This invention relates to a method for recovering oil from subterranean oil reservoirs by waterflooding involving the injection of an aqueous solution or dispersion containing a surfactant.

In the recovery of oil from oil-bearing reservoirs, it is usually possible to recover only minor portions of the original oil by so-called primary recovery methods which utilize only the natural forces present in the reservoir. A variety of supplemental recovery techniques has therefore been employed in order to increase the recovery of oil from subterranean reservoirs. The most widely used supplemental recovery technique is waterflooding, which involves the injection of water into the reservoir; as the water moves through the reservoir, it displaces oil to a production system composed of one or more wells through which the oil is recovered.

It has long been recognized that factors such as the interfacial tension between the injected water and the reservoir oil, the relative mobilities of the reservoir oil and the injected water, and the wettability characteristics of the rock surfaces within the reservoir are factors which influence the amount of oil recovered by water flooding. It has therefore been proposed to add surfactants to the flood water in order to lower the oil-water interfacial tension and/or to alter the wettability characteristics of the reservoir rock. Also, it has been proposed to add viscosifiers such as polymeric thickening agents to all or part of the injected water in order to increase its viscosity, thus decreasing the mobility ratio between the injected water and the oil and improving the sweep efficiency of the waterflood.

Processes which involve the injection of aqueous surfactant solutions are commonly referred to as surfactant waterflooding or as low tension waterflooding, the latter term having reference to the mechanism involving the reduction of the oil-water interfacial tension. Hitherto, many such waterflooding techniques have employed anionic surfactants; for example, Journal of Petroleum Technology, *25* (Feb. 1973), pp. 205—210, describes a promising technique involving the injection of an aqueous solution of petroleum sulfonates within designated equivalent weight ranges and under controlled conditions of salinity. The petroleum sulfonate slug is followed by a thickened water slug which contains a viscosifier such as a water-soluble biopolymer in a graded concentration in order to provide a maximum viscosity greater than that of the reservoir oil and a terminal viscosity near that of water. This thickened water slug is then followed by a driving fluid such as a field brine which is injected as necessary to carry the process to conclusion.

One problem encountered in waterflooding with certain anionic surfactants such as the sulfonates is the lack of stability of these surfactants in a so-called "high brine" environment. These surfactants tend to precipitate from solution in the presence of monovalent salts such as sodium chloride in concentrations in excess of about 2 to 3 weight percent and in the presence of much lower concentrations of divalent metal ions such as calcium and magnesium ions. Typically, divalent metal ion concentrations of about 50 to 100 ppm cause precipitation of the petroleum sulfonates. The salinity of the surfactant slug is also significant with regard to interfacial tensions achieved through the use of petroleum sulfonates such as those disclosed in the above publication. Even in the absence of divalent metal ions, optimum interfacial tensions are seldom achieved at salinities significantly in excess of 2 to 3 weight percent.

Various surfactant formulations which contain anionic sulfonates that tolerate high salinities and/or high divalent metal concentrations have been proposed for use in high brine environments. Thus, U.S. Patents 3,827,497 and 3,890,239 disclose surfactant compositions comprising mixtures of organic sulfonates, for example

$$C_{12}\text{—}C_{15}\text{-}(OCH_2CH_2)_m\text{-}SO_3Na$$

in which m has an average value of 3, a sulfated or sulfonated alkoxylated alcohol and a polyalkylene glycol alkyl ether. U.S. Patent 4,216,097 describes the use of sulfobetaines as agents in waterflooding.

The recovery of oil by chemical flooding from high brine reservoirs is therefore extremely difficult; the difficulty increases with increased reservoir salinity and with reduced reservoir permeability. The Low Tension Water Flood Process, when applied to very high salinity reservoirs, needs substantial modifications to recover oil successfully. It is known to be difficult to reduce the salinity of such reservoirs by preflush with low salinity water to the levels that permit the petroleum sulfonate type surfactants and the polysaccharide mobility control agent to function as designed. The loss of petroleum sulfonate type surfactants by precipitation with the divalent and multivalent cations or by adsorption onto the reservoir rocks is a serious and costly problem. When brine-tolerant surfactants, such as alkylarylpoly(ethoxy)alkane sulfonates, are used under high salinity conditions, two serious problems arise, namely forbiddingly high adsorption losses and frequent formation of brine-oil emulsions resulting in high pressure development. In addition to the above problems associated with the surfactants, the loss of polysaccharide mobility control agents and the plugging of the reservoir rocks by gelation and filtration presents another serious problem.

The present invention provides waterflooding techniques using formulations which reduce the above problems, the formulations containing a brine-tolerant surfactant of the sulfobetaine type, an aliphatic alcohol cosurfactant or cosolvent, a sacrificial quaternary ammonium salt which reduces surfactant loss due to adsorption, and a

nonpolymeric quaternary ammonium mobility control agent containing at least one long chain substituent, and is based on the observation that mixtures of sulfobetaines and aliphatic alcohols are far more effective than sulfobetaines alone.

According to the present invention, there is provided a method for recovering oil from a subterranean oil reservoir penetrated by spaced injection and production systems in which an aqueous fluid is introduced into the reservoir via the injection system to displace oil to the production system, the aqueous fluid comprising (a) a mixture of a sulfobetaine and a preferentially oil-soluble aliphatic alcohol; (b) a quaternary ammonium compound containing at least one hydrocarbon group having from 16 to 20 carbon atoms; and (c) an organic quaternary ammonium compound in which the organic groups are alkyl groups containing from 1 to 4 carbon atoms, the volumetric/weight ratio of the alcohol to the sulfobetaine suitably being from 0.1 to 2.0

The invention involves the use of known quaternary ammonium compounds in conjunction with alcohols under conditions such that the surfactant and alcohol exhibit oil solubility preferences; the alcohol is both water- and oil-soluble but is preferentially oil-soluble. That is to say, if the alcohol is exposed to both oil and water phases, it will tend to partition between the two with a greater concentration in the oil phase. The preferred alcohols may be characterized as having a water solubility at the reservoir temperatures of less than 3.0 weight percent and preferably less than 1.0 weight percent and as being substantially oil-miscible. The preferred surfactant employed in conjunction with the alcohol is preferentially oil-soluble, also.

The quaternary ammonium used according to the invention preferably has the formula

$$\begin{array}{c} R_2 \\ | \\ R_1—N^+—R_4X^- \\ | \\ R_3 \end{array}$$

in which at least one of $R_1$, $R_2$, $R_3$ and $R_4$ is a hydrocarbon group containing from 16 to 20 carbon atoms, preferably an aliphatic group or aliphatic-substituted aryl group containing from 16 to 20 carbon atoms; and each of the others is a hydrocarbon group containing from 1 to 20 carbon atoms, preferably an aliphatic group containing from 1 to 20 carbon atoms, more preferably from 1 to 4 carbon atoms or an aliphatic-substituted aryl group, for example, a mononuclear (phenyl) or dinuclear (naphthyl) aryl group, containing from 7 to 20 carbon atoms; and X is halogen or $NO_3$. Thus, the lipophilic base of the mobility control agent may be provided by aliphatic groups and/or aliphatic-substituted aryl groups. Preferably the aryl component is mononuclear since such compounds are cheaper and more readily available. The aliphatic substituents may be unsaturated and/or contain branched chains or may take the form of normal alkyl radicals. The long-chain group is preferably an alkyl or alkaryl group containing from 16 to 20 carbon atoms. Thus it may be, for example, a hexadecyl, octadecyl or eicosyl group; phenyl substituted with, for example, a decyl or tetradecyl group; or naphthyl substituted with, for example, a hexyl or decyl group. The remaining groups are preferably alkyl, for example methyl, butyl, octyl, dodecyl, tetradecyl, octadecyl or eicosyl groups or alkaryl, for example phenyl or naphthyl substituted with an alkyl group, such as those exemplified above.

In addition to the quaternary ammonium compound containing the long-chain substituent and the preferentially oil-soluble alcohol, each formulation used in the method of the invention contains a brine-tolerant surfactant of the sulfobetaine type, having the formula

$$\begin{array}{c} R_2 \\ | \\ R_1—N^+—CH_2CH_2CH_2SO_3^- \\ | \\ R_3 \end{array}$$

in which $R_1$, $R_2$ and $R_3$ have the meaning given above, $R_1$, $R_2$ and/or $R_3$ may also be substituted with, for example, a hydroxyl or other group. In addition, a quaternary ammonium compound of the formula

$$(R_5)_4N^+X^-$$

in which each $R_5$ is a $C_1$—$C_4$ alkyl group, and X is bromine, chlorine, iodine or $NO_3$, is included as a sacrificial chemical.

The effectiveness of the flooding formulations used according to the invention is especially surprising in view of the known activity of sulfobetaine surfactants when used with oil-soluble alcohols. Sulfobetaine surfactants when used with oil-soluble alcohols (for example hexanol) product water-oil interfacial tension under high salinity conditions an order of magnitude lower than do sulfobetaines alone. Waterflooding techniques of the invention can recover 100% oil from laboratory sand packs and the oil recovery efficiency is not sensitive to the sulfobetaine-alcohol ratio, with the result that the method is applicable under field conditions. However, the adsorption loss of brine-tolerant surfactants, including sulfobetaines, under high salinity conditions is prohibitively high. The use according to the invention of low-cost quaternary ammonium salts as sacrificial chemicals for the sulfobetaine surfactants, however, makes the use of these brine-tolerant surfactants economically feasible. One outstanding feature of the present surfactant systems as compared to most other brine-tolerant surfactants is that there is no pressure development during the oil recovery process, making the method of the invention especially suitable for reservoirs of low permeability. In addition, the discovery of nonpolymeric, single-component mobility control agents makes the flooding method for recovering oil from high salinity reservoirs even more attractive. In contrast to the commercially available polymeric mobility control agents, poly(acrylamide-acrylic acid) and polysaccharide biopolymer, the mobility control agents used in the present invention work better under high salinity conditions. An outstanding feature of the present invention is that formulations containing surfactant, cosurfactant (or cosolvent), sacrificial chemical, and mobility control agent can be used as a single slug to effectively recover all the residual oil.

The method of the present invention may be carried out utilizing injection and production systems including any suitable arrangement of wells. One well arrangement commonly used in waterflooding operations and suitable for use in carrying out the present invention is an integrated five-spot pattern of the type illustrated in U.S. Patent 3,927,716. Other well arrangements may also be used, examples being described in the above patent.

The present invention may be carried out in conjunction with the use of a thickening agent added for mobility control purposes. As indicated by the results of the displacement tests described below, the thickening agent may be added to the aqueous solution of alcohol and surfactant or it may be injected in a separate mobility control slug. When a separate mobility control slug is employed it normally will be injected immediately after the slug containing the surfactant. The thickening agent may be added in concentrations so as to provide a graded viscosity at the trailing edge of the mobility control slug as described in the above literature reference, or to provided graded viscosities at both the leading and trailing edges of the mobility control slug as disclosed in U.S. Patent 4,018,281. Alternatively, the thickening agent concentration may be relatively constant throughout. Normally, the viscosity of at least a portion of the mobility control slug should be at least that of the reservoir oil and typically it will be from about 1 to 4 times the viscosity of the reservoir oil. Various thickening agents which may be employed for mobility control purposes are well known in the art and include such polymers as the biopolymer "Kelzan" identified below, and the various partially hydrolyzed polyacrylamides available from the Dow Chemical Company under the trade name "Pusher".

The sulfobetaine surfactant may be present in any suitable concentration depending upon the characteristics of the particular reservoir involved and such factors as surfactant consumption, for example by adsorption and dispersion of the surfactant into the reservoir water. Its concentration in the surfactant slug may be from 0.25 to 3 weight percent, although in most applications the surfactant will be employed in a concentration of from 0.5 weight percent to 2.0 weight percent. The alcohol concentration will, of course, depend upon the concentration of the surfactant and the desired ratio. A ratio of surfactant to alcohol of 3:1 to 2:1 is preferred. The aqueous liquid containing the alcohol and sulfobetaine surfactant may be injected in amounts from 0.1 to 1.0 pore volumes with the larger pore volume amounts being used with lower surfactant concentrations. Usually it is desired to inject the alcohol surfactant solution in an amount of 0.25 to 0.5 pore volumes. The term "pore volume" used herein means that volume of the portions of the reservoir formation underlying the well pattern employed, and is described in greater detail in U.S. Patent 3,927,716.

The mobility control agent, i.e. the long-chain quaternary ammonium compound, will generally be present in the surfactant slug in concentrations from 0.1 weight percent to 5 weight percent, preferably from 1 to 3 weight percent. The concentration of the sacrificial quaternary ammonium compound in the surfactant slug will generally be from 0.5 to 5 weight percent, preferably from 1 to 3 weight percent.

The following Examples illustrate the invention.

The oil displacement tests of the Examples were carried out in flow tubes 1.83 m in length and about 6.4 mm inside diameter. For each run, the tube was first packed with unconsolidated Berea sand and then saturated with saline water. Crude oil was then flooded into the tube until the effluent from the tube contained no water, the total amount of water being displaced from the tube being measured to determine the initial oil saturation. Each tube was then subjected to a simulated waterflood by injecting a brine until the effluent was free of oil. The amount of oil produced during this operation was measured in order to determine the residual oil saturation after waterflood of the tube. A simulated surfactant waterflood was then carried out by injecting an aqueous surfactant slug followed by the injection of a driving fluid until the effluent was free of oil. The amount of oil recovered during this operation was measured in order to determine the final residual oil saturation and the amount of tertiary oil recovered. The water used in the initial water saturation step, the simulated waterflood, the surfactant slug and the drive fluid was brine containing 13.2 wt. % NaCl, 3.47 wt.% $CaCl_2.2H_2O$ and 1.53 wt.% $MgCl_2.6H_2O$.

All the examples employed West Burkburnett-produced oil and the synthetic West Burkburnett brine described above. To simulate all types of reservoirs, brine wet, oil wet and aged brine wet Berea sandpack columns were used, as follows:

1. Brine wet column—The column was packed with dry Berea sand, evacuated and filled with brine to determine the pore volume, oil-flooded until no more brine was produced and brine-flooded until no more oil was produced to determine the amount of residual oil.

2. Oil wet column—The column was packed with Berea sand, dried at 90°C and 133 Pa pressure for more than four hours. The column was then evacuated, filled with oil to determine the pore volume and brine-flooded until no more

oil was produced to determine the amount of residual oil.

3. Aged brine wet column—The column was packed with dry Berea sand, evacuated and filled with brine to determine the pore volume and oil-flooded until no more brine was produced. The column was then capped at both ends and aged for a period of time (for example 5 to 6 months). Then the column was brine-flooded until no more oil was produced to determine the amount of residual oil.

Example I

Into a brine wet column was injected 0.25 pore volume of a surfactant solution in brine containing a sacrificial chemical. The solution contained 2 wt.% of the $C_{18}$ surfactant of Example I, 1.4 wt.% of n-hexanol and 3 wt.% of tetraethylammonium bromide. The surfactant injection was followed by a mobility control solution containing hexadecyltrimethylammonium bromide (1.5 wt.%) and tetraethylammonium bromide (1.5 wt.%) in brine and having a viscosity of 12 centipoise at 23 $sec^{-1}$ and room temperature. Oil started to produce after 0.6 pore volume; 50% oil was produced after 1.4 pore volumes; and 100% oil was produced after 2 pore volumes. No pressure development was observed.

Example II

An aged (6.5 months) brine wet column was injected with 0.5 pore volume of the surfactant and sacrificial solution as described in Example III, followed by the mobility control solution as described in Example III. Oil production commenced after 0.25 pore volume injection; 50% oil was recovered after 1.8 pore volumes and 100% after 2.6 pore volumes. No pressure development was observed.

Example III

An oil wet column was injected with 0.5 pore volume of the surfactant-sacrificial chemical solution followed by the mobility control solution as described in Example IV. Oil production commenced after 0.6 pore volume injection; 50% oil was produced after 2 pore volumes and 100% after 2.7 pore volumes.

**Claims**

1. A method for recovering oil from a subterranean oil reservoir penetrated by spaced injection and production systems in which an aqueous fluid is introduced into the reservoir via the injection system to displace oil to the production system, the aqueous fluid comprising:

(a) a mixture of a sulfobetaine and a preferentially oil-soluble aliphatic alcohol;

(b) a quaternary ammonium compound containing at least one hydrocarbon group having from 16 to 20 carbon atoms; and

(c) an organic quaternary ammonium compound in which the organic groups are alkyl groups containing from 1 to 4 carbon atoms.

2. A method according to Claim 1, wherein component (a) contains a sulfobetaine of the formula

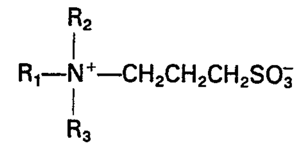

in which each of $R_1$, $R_2$ and $R_3$ is a hydrocarbon group containing from 1 to 20 carbon atoms, and an aliphatic alcohol containing from 5 to 7 carbon atoms.

3. A method according to Claim 1 or Claim 2, wherein component (b) contains an ammonium compound of the formula

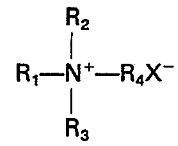

in which at least one of $R_1$, $R_2$, $R_3$ and $R_4$ is a hydrocarbon group containing from 16 to 20 carbon atoms and each of the others is a hydrocarbon group containing from 1 to 20 carbon atoms, and X is halogen or $NO_3$.

4. A method according to Claim 2 or Claim 3, wherein each hydrocarbon group represented by $R_1$, $R_2$, $R_3$ and $R_4$ is an aliphatic group containing from 1 to 20 carbon atoms or an aliphatic-substituted aryl group containing from 7 to 20 carbon atoms.

5. A method according to any one of Claims 1 to 4, wherein component (c) contains an ammonium compound of the formula

$$(R_5)_4N^+X^-$$

in which each $R_5$ is an alkyl group containing from 1 to 4 carbon atoms and X is halogen or $NO_3$.

6. A method according to any one of Claims 1 to 5, wherein the aliphatic alcohol is hexanol.

7. A method according to any one of Claims 1 to 6, wherein the sulfobetaine has the formula

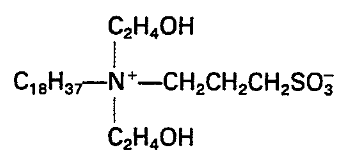

8. A method according to any one of Claims 1 to 7, wherein component (b) is a compound of the formula

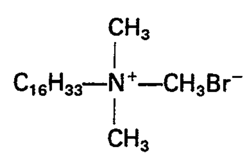

9. A compound according to any one of Claims 1 to 8, wherein component (c) is a compound of the formula

$$(C_2H_5)_4N^+Br^-$$

**Patentansprüche**

1. Verfahren zur Gewinnung von Öl aus einem unterirdischen Ölreservoir, das von örtlich verteilten Injektions- Förderungssystemen durchsetzt ist, in welchen eine wäßrige Flüssigkeit in das Reservoir über das Injektionssystem eingeführt wird, um Öl zum Förder- bzw. Produktionssystem zu verdrängen, wobei die wäßrige Flüssigkeit umfaßt:

(a) eine Mischung aus Sulfobetain und einem vorzugsweise öllöslichen aliphatischen Alkohol;

(b) eine quaternäre Ammoniumverbindung, die wenigstens eine Kohlenwasserstoffgruppe mit 16 bis 20 Kohlenstoffatomen aufweist; und

(c) eine organische quaternäre Ammoniumverbindung, in welcher die organischen Gruppen Alkylgruppen mit 1 bis 4 Kohlenstoffatomen sind.

2. Verfahren nach Anspruch 1, dadurch gekennzeichnet, daß die Komponente (a) ein Sulfobetain der folgenden Formel enthält:

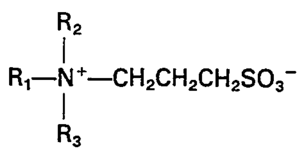

wobei jeder der Reste $R_1$, $R_2$ und $R_3$ eine Kohlenwasserstoffgruppe mit 1 bis 20 Kohlenstoffatomen und ein aliphatischer Alkohol mit 5 bis 7 Kohlenstoffatomen ist.

3. Verfahren nach Anspruch 1 oder 2, dadurch gekennzeichnet, daß die Komponente (b) eine Ammoniumverbindung der folgenden Formel enthält:

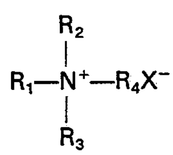

wobei wenigstens einer der Reste $R_1$, $R_2$, $R_3$ und $R_4$ eine Kohlenwasserstoffgruppe mit 16 bis 20 Kohlenstoffatomen ist und jeder der anderen eine Kohlenwasserstoffgruppe ist, die 1 bis 20 Kohlenstoffatome enthält, und X ein Halogen oder $NO_3$ ist.

4. Verfahren nach Anspruch 2 oder 3, dadurch gekennzeichnet, daß jede der durch $R_1$, $R_2$, $R_3$ und $R_4$ dargestellten KW-Gruppen eine aliphatische Gruppe mit 1 bis 20 Kohlenstoffatomen oder eine aliphatisch substituierte Arylgruppe mit 7 bis 20 Kohlenstoffatomen bedeutet.

5. Verfahren nach einem der Ansprüche 1 bis 4, dadurch gekennzeichnet, daß die Komponente (c) eine Ammoniumverbindung der Formel

$$(R_5)_4N^+X^-$$

enthält, in welcher jeder Rest $R_5$ eine Alkylgruppe mit 1 bis 4 Kohlenstoffatomen und X ein Halogen oder $NO_3$ ist.

6. Verfahren nach einem der Ansprüche 1 bis 5, dadurch gekennzeichnet, daß der aliphatische Alkohol Hexanol ist.

7. Verfahren nach einem der Ansprüche 1 bis 6, dadurch gekennzeichnet, daß das Sulfobetain die Formel

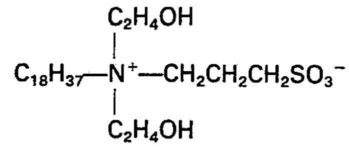

aufweist.

8. Verfahren nach einem der Ansprüche 1 bis 7, dadurch gekennzeichnet, daß die Komponente (b) eine Verbindung der Formel

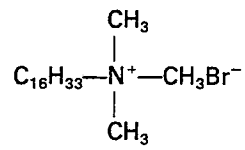

ist.

9. Verfahren nach einem der Ansprüche 1 bis 8, dadurch gekennzeichnet, daß die Komponente (c) eine Verbindung der Formel

$$(C_2H_5)_4N^+Br^-$$

ist.

**Revendications**

1. Un procédé pour récupérer le pétrole d'un réservoir souterrain de pétrole pénétré par des systèmes espacés d'injection et de production, dans lequel on introduit un liquide aqueux dans la réservoir par le système d'injection pour déplacer le pétrole vers le système de production, le liquide aqueux comprenant:

(a) un mélange d'une sulfobétaîne et d'un alcool aliphatique préférentiellement soluble dans l'huile;

(b) un composé d'ammonium quaternaire contenant au moins un groupe hydrocarbure ayant 18 à 20 atomes de carbone et

(c) un composé d'ammonium quaternaire organique dans lequel les groupes organiques sont des groupes alkyles contenant de 1 à 4 atomes de carbone.

2. Un procédé selon la revendication 1, dans lequel le composant (a) contient une sulfobétaîne de formule

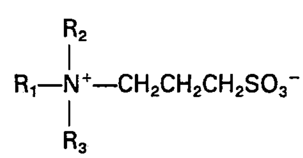

dans laquelle chacun des restes $R_1$, $R_2$ et $R_3$ est un groupe hydrocarbure contenant de 1 à 20 atomes de carbone et une alcool aliphatique contenant de 5 à 7 atomes de carbone.

3. Un procédé selon la revendication 1 ou 2, dans lequel le composant (b) contient un composé d'ammonium de formule

$$\begin{array}{c} R_2 \\ | \\ R_1—N^+—R_4X^- \\ | \\ R_3 \end{array}$$

dans laquelle l'une au moins des restes $R_1$, $R_2$, $R_3$ et $R_4$ est un groupe hydrocarbure contenant de 16 à 20 atomes de carbone et chacun des autres est un groupe hydrocarbure contenant de 1 à 20 atomes de carbone et X est un halogène ou $NO_3$.

4. Un procédé selon la revendication 2 ou 3, dans lequel chaque groupe hydrocarbure représenté par $R_1$, $R_2$, $R_3$ et $R_4$ est un groupe aliphatique contenant de 1 à 20 atomes de carbone ou un groupe aryle à substituant aliphatique contenant de 7 à 20 atomes de carbone.

5. Un procédé selon l'une quelconque des revendications 1 à 4, dans lequel le composant (c) contient un composé d'ammonium de formule

$$(R_5)_4N^+X^-$$

dans laquelle chaque reste $R_5$ est une groupe alkyle contenant de 1 à 4 atomes de carbone et X est un halogène ou $NO_3$.

6. Un procédé selon l'une quelconque des revendications 1 à 5, dans lequel l'alcool aliphatique est l'hexanol.

7. Un procédé selon l'une quelconque des revendications 1 à 6, dans lequel la sulfobétaîne répond à la formule

$$\begin{array}{c} C_2H_4OH \\ | \\ C_{18}H_{37}—N^+—CH_2CH_2CH_2SO_3^- \\ | \\ C_2H_4OH \end{array}$$

8. Un procédé selon l'une quelconque des revendications 1 à 7, dans lequel le composant (b) est une composé de formule

$$\begin{array}{c} CH_3 \\ | \\ C_{16}H_{33}—N^+—CH_3Br^- \\ | \\ CH_3 \end{array}$$

9. Un procédé selon l'une quelconque des revendications 1 à 8, dans lequel le composant (c) est un composé de formule

$$(C_2H_5)_4N^+Br^-$$